(19) Europäisches Patentamt
European Patent Office
Office européen des brevets

(11) Publication number : **0 664 331 A1**

(12) **EUROPEAN PATENT APPLICATION**

(21) Application number : **95200115.4**

(22) Date of filing : **18.01.95**

(51) Int. Cl.[6] : **C10M 145/38,** C08G 65/32, C10L 1/18, // C10N30:12, C10N40:25, C10N70:00

(30) Priority : **20.01.94 EP 94300425**

(43) Date of publication of application : **26.07.95 Bulletin 95/30**

(84) Designated Contracting States : **BE DE ES FR GB IT NL**

(71) Applicant : **SHELL INTERNATIONALE RESEARCH MAATSCHAPPIJ B.V.
Carel van Bylandtlaan 30
NL-2596 HR Den Haag (NL)**

(72) Inventor : **Betney, Kenneth Henry
18 Millfield Close
Farndon, Cheshire CH3 6PW (GB)**
Inventor : **Ross, Alan Norman
99b London Road
Teynham, Sittingbourne, Kent ME9 9QL (GB)**
Inventor : **Wilson, Arthur Colin
72 Mallings Drive
Bearsted, Maidstone, Kent M14 4HB (GB)**

(54) **Substituted polyoxyalkylene compounds.**

(57) The invention provides a polyoxyalkylene compound of general formula

$$R^1\text{-}A\text{-}X\text{-}\overset{\overset{O}{\|}}{C}\text{-}R^2 \qquad \mathrm{I}$$

wherein

$R^1$ represents a hydrogen atom or an optionally substituted alkyl, alkenyl, alkynyl, aryl, arylalkyl, cycloalkyl, alkylaryl or heterocyclyl group ;

$R^2$ represents an optionally substituted alkyl, alkenyl, alkynyl, aryl, arylalkyl, cycloalkyl, alkylaryl, heterocyclyl, alkoxy, aryloxy, alkylamino, dialkylamino or arylamino group ;

A represents an oxygen atom (-O-) or a group -NH- ; and

X represents a polyoxypropylene chain or a random copolymer of ethylene oxide/propylene oxide, and an oxygen atom of group X is bonded directly to the $R^2CO$- moiety.

The invention further provides a process for the preparation of the compound, a lubricating oil composition and a fuel composition which each include the compound, a lubricating oil concentrate, the use of the compound as a rust inhibitor and a method of operating an internal combustion engine.



Jouve, 18, rue Saint-Denis, 75001 PARIS

This invention relates to substituted polyoxyalkylene compounds and particularly, although not exclusively, to the use of such compounds as rust inhibitors in, for example, lubricating oil compositions.

Polyoxyalkylene compounds have been relatively widely used as additives in lubricating oil compositions. For example, European Patent Application No. 0 309 105 (Exxon) discloses non-ionic surfactants such as polyoxyalkylene polyols and esters thereof which are stated to be useful as ashless rust inhibitors in lubricating oils. Preferred polyols are prepared as block copolymers so that the compounds have both hydrophobic and hydrophilic portions. Pluronic (Trade Mark) polyols are stated to be particularly well suited as rust inhibitors.

U.S. Patent No. 3 509 052 (Lubrizol) discloses lubricating compositions which include a polyoxyalkylene polyol emulsifier (or an ester thereof). Preferred polyols have hydrophobic and hydrophilic portions. Pluronic (Trade Mark) polyols are stated to be preferred.

U.S. Patent No. 3 784 474 (Chevron) discloses a lubricating oil composition including a rust inhibitor in the form of a polyoxyalkylene polyol, glycol, ester or urethane. Preferred polyoxyalkylene glycols include propylene oxide polymers or block copolymers. Pluronic (Trade Mark) polyols are disclosed as commercially available examples of suitable polyols. The specific examples in the patent describe rust inhibitors prepared using a polyoxyalkylene glycol block copolymer of oxypropylene and oxyethylene units.

U.S. Patent No. 3 933 663 (Chevron) discloses a lubricating composition including an acid neutralisation accelerating compound in the form of a polyalkoxylated compound. Suitable compounds are stated to include certain block copolymers of propylene oxide and ethylene oxide such as Pluronics (Trade Mark). The structure of the compounds is stated to be amphipathic.

U.S. Patent No. 3 957 854 (Lubrizol) discloses oil soluble carboxylic esters prepared using a polycarboxylic acid acylating agent and at least one polyoxyalkylene alcohol which is a block copolymer which includes hydrophobic and hydrophilic portions. Suitable polyoxyalkylene alcohols are stated to be the Pluronic (Trade Mark) polyols.

U.S. Patent No. 4 493 776 (Shell) discloses a lubricating oil composition including a supplemental rust inhibitor which comprises a mixture of at least one compound selected from alkyl, aryl, alkaryl or arylalkyl-substituted oxyethylene ethanol or oxypropylene propanol; and one compound selected from alkyl, aryl, alkaryl or arylalkyl-substituted copolymers of ethylene oxide and propylene oxide.

U.S. Patent No. 5 204 012 (Ethyl Corportion) discloses a lubricating oil composition which includes an esterification product having a total acid number (TAN) in the range about 10 to about 40 prepared by reacting ethylene oxide/propylene oxide block copolymer with a long-chain monocarboxylic acid.

This invention is based upon the discovery of a class of substituted polyoxyalkylene compounds which have unexpectedly advantageous properties when used in, for example, lubricating oil compositions.

According to the invention, there is provided a polyoxyalkylene compound of general formula

$$R^1-A-X-\overset{O}{\overset{\|}{C}}-R^2 \qquad \text{I}$$

wherein

$R^1$ represents a hydrogen atom or an optionally substituted alkyl, alkenyl, alkynyl, aryl, arylalkyl, cycloalkyl, alkylaryl or heterocyclyl group;

$R^2$ represents an optionally substituted alkyl, alkenyl, alkynyl, aryl, arylalkyl, cycloalkyl, alkylaryl, heterocyclyl, alkoxy, aryloxy, alkylamino, dialkylamino or arylamino group;

A represents an oxygen atom (-O-) or a group -NH-; and

X represents a polyoxypropylene chain or a random copolymer of ethylene oxide/propylene oxide, and an oxygen atom of group X is bonded directly to the $R^2CO$- moiety.

It has been found unexpectedly that the polyoxyalkylene compounds of general formula I are advantageous rust inhibitors in lubricating oil compositions in comparison to other polyoxyalkylene rust inhibitors which include, for example, a block copolymeric polyoxyalkylene chain prepared using a Pluronic (Trade Mark) polyol. In particular, polyoxyalkylene compounds of general formula I may exhibit improved package stability and/or have low acid values, whilst still having satisfactory rust inhibition properties.

Generally, when any moieties described herein comprise an alkyl, alkenyl or alkynyl group, the group may be linear or branched and preferably contains 1 to 50, more preferably 1 to 25 and, still more preferably, 2 to 20 carbon atoms. When any moieties described herein comprise an aryl group, the group may be an optionally substituted phenyl group. When any of the moieties comprises an arylalkyl group, the group may be an optionally substituted benzyl group. Preferably, phenyl or benzyl groups are unsubstituted or substituted by an alkyl group. When any moieties described herein comprise a cycloalkyl group, the group may contain from 3 to 8, preferaby 3 to 6, carbon atoms, e.g. a cyclopentyl or cyclohexyl group. When any of the moieties comprises

a heterocyclyl group, the group may be any saturated or unsaturated ring system, e.g. a $C_5$-$C_7$ ring system, containing at least one heteroatom selected from oxygen, nitrogen and sulphur, 5- and 6-membered rings being especially preferred, e.g. a tetrahydrofuranyl, furanyl, piperidinyl, pyridinyl, tetrahydrothiophenyl or thiophenyl (thienyl) group.

Examples of substituent groups include halogen atoms (e.g. chlorine atoms), nitro, hydroxyl, carboxyl, amino, cyano, formyl, alkoxycarbonyl, alkanoyl, alkylthio, alkylsulphinyl, alkylsulphonyl, carbamoyl, alkylamido and polyoxyalkylene groups. When any of the foregoing substituents contain an alkyl or alkylene moiety, this may be linear or branched and may contain up to 12, preferably up to 6, and especially up to 4, carbon atoms.

Preferably, $R^1$ represents a hydrogen atom or an optionally substituted alkyl group.

When A represents a group -NH-, $R^1$ preferably represents a substituted alkyl group of the general formula

$$H_2N\text{-}(CHR^3)_r\text{-}CH_2\text{-}[O\text{-}CH_2(CHR^3)_r]_s\text{-} \qquad II$$

wherein each $R^3$ independently represents a hydrogen atom or a methyl group, r is in the range from 1 to 3 and s is in the range from 1 to 200.

It is preferred that in formula II, r is 1, each $R^3$ represents a methyl group and s is in the range from 4 to 40.

When A represents an oxygen atom, $R^1$ preferably represents an unsubstituted alkyl group, particularly a $C_4$-$C_{16}$ alkyl group. Preferably, $R^1$ represents a linear alkyl group.

Preferably, $R^2$ represents an optionally substituted alkyl, phenyl or benzyl group.

Where $R^2$ represents an optionally substituted alkyl group, the group preferably has at least 4 carbon atoms. Examples of optionally substituted alkyl groups include $-(CH_2)_4COOH$, t-butyl, nonyl, 1-ethylpentyl, linear alkyl groups of general formula $CH_3(CH_2)_n$- wherein n represents 8 to 20 and alkyl groups of general formula

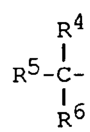

III

wherein $R^4$ represents a group of formula $C_aH_{2a+1}$ - ; $R^5$ represents a group of formula $C_bH_{2b+1}$ - ; $R^6$ represents a group of general formula $C_cH_{2c+1}$ - ; and the total of a + b + c is in the range from 3 to 20, preferably 3 to 8.

Where $R^2$ represents a substituted alkyl group, the alkyl group may be substituted by a group of general formula

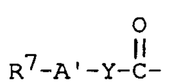

IV

wherein $R^7$ represents a hydrogen atom or an optionally substituted alkyl, alkenyl, alkynyl, aryl, arylalkyl, cycloalkyl, alkylaryl or heterocyclyl group; A' represents an oxygen atom (-O-) or a group -NH-; and Y represents a polyoxypropylene chain or a random copolymer of ethylene oxide/propylene oxide, and an oxygen atom of group Y is bonded directly to the carbonyl group. Preferably, $R^7$ and $R^1$ represent the same atom or group. Preferably, Y and X represent the same moiety. Preferably A and A' both represent an oxygen atom or a group -NH-.

The number average molecular weight ($M_n$) of group X or Y is preferably in the range 300 to 5000, more preferably in the range 300 to 3500, and especially in the range 500 to 2500. Where group X or Y represents a polyoxypropylene chain, the number average molecular weight of said chain may be in the range 300 to 3000. Where group X or Y represents a random copolymer of ethylene oxide/propylene oxide, the number average molecular weight may be in the range 1000 to 3000.

Group X or Y preferably comprises $\propto$ wt% of ethylene oxide and (100 - $\propto$) wt% of propylene oxide where $\propto$ is in the range 0 to 60. More preferably, $\propto$ is in the range 0 to 30.

The total acid number (TAN) of a material is the quantity of base, expressed in milligrams of potassium hydroxide, that is required to neutralise all acidic constituents present in 1 gram of the material. Preferably, the TAN of said compound of general formula I is less than 5 and, more preferably, less than 2. Especially preferred is the case where the TAN is less than 0.5.

The invention extends to a process for the preparation of a compound of general formula I, the process comprising reacting a compound of general formula

$$R^1\text{-}A\text{-}X\text{-}OH \qquad V$$

wherein $R^1$, A and X are as defined above, with a compound of general formula

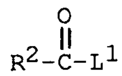

VI

wherein $R^2$ is as defined above and $L^1$ is a leaving group.

The reaction is preferably carried out in the presence of an aprotic solvent and optionally in the presence of an acid, e.g. para-toluene sulphonic acid, or a base, e.g. an alkali metal carbonate or bicarbonate, or an amine, e.g. a trialkyl amine or pyridine. The reaction is conveniently carried out at a temperature in the range from 40°C to 180°C. The reaction is preferably carried out under reflux.

$L^1$ is suitably selected so that compounds of general formulas V and VI react together to form an ester. $L^1$ may represent a halogen, especially a chlorine atom, or a hydroxy group. Alternatively, said compound of general formula VI may represent an anhydride, in which case $L^1$ represents a group $R^2COO$- where $R^2$ is as defined above.

Where, in the compound of general formula I, $R^2$ represents an alkyl group substituted by a group of general formula IV as described above, said compound of general formula I may be prepared by reacting at least one compound of general formula V p

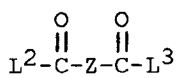

VII

wherein $L^2$ and $L^3$ may be the same or different and represent leaving groups; and Z represents a divalent linear or branched hydrocarbon moiety of general formula, $-(CR^8R^9)_m-$ wherein m is an integer, each $R^8$ independently represents a hydrogen atom or an alkyl group, and each $R^9$ independently represents a hydrogen atom or an alkyl group.

$L^2$ and $L^3$ are suitably selected and the conditions for the reaction are such that compounds of general formulas V and VII react together to produce a compound of general formula I having at least two ester groups. $L^2$ and $L^3$ may independently represent a halogen, especially a chlorine atom, or a hydroxy group. Preferably, $L^2$ and $L^3$ both represent a hydroxy group. In this case, said compound of general formula V represents a dicarboxylic acid, e.g. adipic acid.

The compounds of general formulae V, VI and VII are known compounds or may be prepared by processes analogous to known processes.

For example, compounds of general formula V in which A represents an oxygen atom and $R^1$ represents an alkyl group, or in which A represents a group -NH- and $R^1$ represents a substituted alkyl group of formula II above, may conveniently be prepared by polymerising propylene oxide, and optionally ethylene oxide, in the presence of an alcohol initiator such as those sold by member companies of the Royal Dutch/Shell Group under the trade mark "DOBANOL", in particular "DOBANOL" 25, or an amine initiator of the general formula

$$H_2N-(CHR^3)_r-CH_2-[O-CH_2-(CHR^3)_r]_s-NH_2 \qquad (II')$$

wherein $R^3$, r and s are as defined above, which is commercially available from the Texaco Chemical Company, Bellaire, Texas, U.S.A.

Compounds of general formula VI in which $R^2$ represents a branched alkyl group, e.g. an alkyl group of formula III above, and $L^1$ represents a hydroxy group are commercially available from Exxon under the trade mark "CEKANOIC", e.g. "CEKANOIC" 10 acid, and from member companies of the Royal Dutch/Shell Group under the trade mark "VERSATIC", e.g. "VERSATIC" 5 acid and "VERSATIC" 10 acid.

The invention extends to a compound prepared by reacting compounds of general formulas V and VI together.

The invention extends to a lubricating oil composition comprising a major amount (more than 50wt% based on total composition) of a lubricating oil and a minor amount of a compound of general formula I.

The lubricating oil used in the present composition can be natural, mineral or synthetic in origin. Natural lubricating oils include animal and vegetable oils, such as castor oil. Mineral oils comprise the lubricating oil fractions derived from crude oils, coal or shale, which fractions may have been subjected to certain treatments such as clay-, acid-, solvent- or hydrogenation treatments. Synthetic lubricating oils include synthetic polymers or hydrocarbons, modified alkylene oxide polymers, and ester lubricants, which are known in the art. These lubricating oils are preferably crankcase lubricating oils for spark-ignition and compression-ignition engines, but include also hydraulic lubricants, metal-working fluids, automatic transmission fluids and the like.

The lubricating oil composition preferably contains the compound of general formula I in an amount from

0.05 to 10wt%, more preferably from 0.1 to 5wt%, and especially from 0.1 to 1wt%, based on the total composition.

The lubricating oil composition may contain various other additives known in the art, such as viscosity index improvers, e.g. linear or star-shaped polymers of a diene such as isoprene or butadiene, or a copolymer of such a diene with optionally substituted styrene. These copolymers are suitably block copolymers and are preferably hydrogenated to such an extent as to saturate most of the olefinic unsaturation.

The lubricating oil composition may further contain an ashless dispersant selected from oil soluble salts, amides, imides, oxazolines and esters, or mixtures thereof, of long chain hydrocarbon substituted mono and dicarboxylic acids or their anhydrides; and long chain aliphatic hydrocarbons having a polyamine attached directly thereto. Especially preferred ashless dispersants include polyolefin-substituted succinimides.

Other suitable additives that may be present in the lubricating oil composition include extreme pressure-/anti-wear additives such as zinc or sodium dithiophosphates, anti-oxidants, friction modifiers or metal-containing detergents such as phenates, sulphonates, alkylsalicylates or naphthenates, all of which detergents may be overbased.

The lubricating oil composition according to the present invention is suitably prepared by blending an additive concentrate into a lubricating base oil. Such a concentrate generally comprises a lubricating oil as solvent/diluent and one or more additives in a concentrated form. Hence the present invention further provides a lubricating oil concentrate comprising a diluent and a compound of general formula I as described above, in an amount of 1 to 80wt% based on the total concentrate.

The invention extends to the use of a compound of general formula I as a rust inhibitor.

The invention further extends to a method of operating an internal combustion engine to inhibit rust formation, the method comprising lubricating said engine with a lubricating oil composition as described above.

The compound of general formula I may also be used in fuels, for example gasoline, diesel fuel, kerosine and fuel oils. Suitably, the compound of general formula I can be used as carrier fluid for gasoline and diesel fuel additive packages. Accordingly, the invention extends to a fuel composition comprising a major amount (more than 50wt% based on total composition) of a fuel and a minor amount of a compound of general formula I.

The fuel compositions of the present invention desirably also contain a minor amount of at least one hydrocarbon-soluble ashless dispersant. The compounds useful as ashless dispersants generally are characterised by a "polar" group attached to a relatively high molecular weight hydrocarbon chain. The "polar" group generally contains one or more of the elements nitrogen, oxygen and phosphorus. The solubilising chains are generally higher in molecular weight than those employed with the metallic types, but in some instances they may be quite similar.

In general, any of the ashless dispersants which are known in the art for use in lubricants and fuels can be utilised in the fuel compositions of the present invention.

In one embodiment of the present invention, the dispersant is selected from the group consisting of

(i) at least one hydrocarbyl-substituted amine wherein the hydrocarbyl substituent is substantially aliphatic and contains at least 8 carbon atoms;

(ii) at least one acylated, nitrogen-containing compound having a hydrocarbon-based substituent of at least 10 aliphatic carbon atoms made by reacting a carboxylic acid acylating agent with at least one amino compound containing at least one

$$-NH-$$

group, said acylating agent being linked to said amino compound through an imido, amido, amidine, or acyloxy ammonium linkage;

(iii) at least one nitrogen-containing condensate of a phenol, aldehyde and amino compound having at least one

$$-NH-$$

group;

(iv) at least one ester of a substituted carboxylic acid;

(v) at least one polymeric dispersant;

(vi) at least one hydrocarbon-substituted phenolic dispersant; and

(vii) at least one fuel soluble alkoxylated derivative of an alcohol, phenol or amine.

The hydrocarbyl-substituted amines useful in the fuel compositions of this invention are well known to those skilled in the art and they are described in a number of patents. Among these are U.S. Patents Nos. 3,275,554, 3,438,757, 3,454,555, 3,565,804, 3,755,433 and 3,822,209. These patents disclose suitable hydrocarbyl-substituted amines for use in the present invention including their method of preparation.

A typical hydrocarbyl-substituted amine has the general formula:

$$[R^{10}R^{11}N]_x[-N([-UN-]_d[-UQ]_e)]_yR^{12}_fH_{1+2y+dy-f} \qquad VIII$$

wherein $R^{10}$ is hydrogen, a hydrocarbyl group of from 1 to 10 carbon atoms, or hydroxyhydrocarbyl group of from 1 to 10 carbon atoms; $R^{11}$ is hydrogen, a hydrocarbyl group of from 1 to 10 carbon atoms, or hydroxyhydrocarbyl group of from 1 to 10 carbon atoms, and may be taken together with $R^{10}$ and N to form a ring of from 5 to 6 annular members and up to 12 carbon atoms; U is an alkylene group of from 2 to 10 carbon atoms, any necessary hydrocarbons to accommodate the trivalent nitrogens are implied herein, $R^{12}$ is an aliphatic hydrocarbon of from 30 to 400 carbon atoms; Q is a piperazine structure; d is an integer of from 0 to 10; e is an integer of from 0 to 1; d+2e is an integer of from 1 to 10; f is an integer of from 1 to 5 and is an average in the range of 1 to 4, and equal to or less than the number of nitrogen atoms in the molecule; x is an integer of from 0 to 1; y is an integer of from 0 to 1; and x+y is equal to 1.

In interpreting this formula, it is to be understood that the $R^{12}$ and H atoms are attached to the unsatisfied nitrogen valences within the brackets of the formula. Thus, for example, the formula includes sub-generic formulae wherein the $R^{12}$ is attached to terminal nitrogens and isomeric subgeneric formulae wherein it is attached to non-terminal nitrogen atoms. Nitrogen atoms not attached to an $R^{12}$ may bear a hydrogen or an $R^{10}R^{11}N$ substituent.

The hydrocarbyl-substituted amines useful in this invention and embraced by formula VIII above include monoamines such as poly(propylene)amine, N,N-dimethyl-n-poly(ethylene/propylene)-amine (50:50 mole ratio of monomers), poly(isobutene)amine, N,N-di(hydroxyethyl)-N-poly(isobutene)amine, poly(isobutene/-1-butene/2-butene)-amine (50:25:25 mole ratio of monomers), N-(2-hydroxy-ethyl)-N-poly(isobutene)-amine, N-(2-hydroxypropyl)-N-poly(isobutene)amine, N-poly(1-butene)-aniline, and N-poly(isobutene)-morpholine; and polyamines such as N-poly(isobutene) ethylene diamine, N-poly(propylene) trimethylene diamine, N-poly(1-butene) diethylene triamine, N',N'-poly(isobutene) tetraethylene pentamine, N,N-dimethyl-N'-poly(propylene), and 1,3-propylene diamine.

The hydrocarbyl-substituted amines useful in the fuel compositions of the invention also include certain N-aminohydrocarbyl morpholines of the general formula:

$$R^{12}N(R^{10})UM \qquad IX$$

wherein $R^{12}$ is an aliphatic hydrocarbon group of from 30 to 400 carbons, $R^{10}$ is hydrogen, a hydrocarbyl group of from 1 to 10 carbon atoms or hydroxyhydrocarbyl group of from 1 to 10 carbon atoms, U is an alkylene group of from 2 to 10 carbon atoms, and M is a morpholine structure. These hydrocarbyl-substituted aminohydrocarbyl morpholines as well as the polyamines described by formula VIII are among the typical hydrocarbyl-substituted amines used in preparing compositions of this invention.

A number of acylated, nitrogen-containing compounds having a hydrocarbon-based substituent of at least 10 aliphatic carbon atoms and made by reacting a carboxylic acid acylating agent with an amino compound are known to those skilled in the art. The acylating agent is linked to the amino compound through an imido, amido, amidine or acyloxy ammonium linkage. The hydrocarbon-based substituent of at least 10 aliphatic carbon atoms may be in either the carboxylic acid acylating agent derived portion of the molecule or in the amino compound derived portion of the molecule. Preferably, however, it is in the acylating agent portion. The acylating agent can vary from formic acid and its acylating derivatives to acylating agents having high molecular weight aliphatic substituents of up to 5,000, 10,000 or 20,000 carbon atoms. The amino compounds can vary from ammonia itself to amines having aliphatic substituents of up to 30 carbon atoms.

A typical class of acylated, nitrogen-containing compounds useful in the compositions of this invention are those made by reacting an acylating agent having an aliphatic substituent of at least 10 carbon atoms and a nitrogen compound characterised by the presence of at least one -NH- group. Typically, the acylating agent will be a mono- or polycarboxylic acid (or reactive equivalent thereof) such as a substituted succinic or propionic acid and the amino compound will be a polyamine or mixture of polyamines, most typically, a mixture of ethylene polyamines. The amine may also be a hydroxyalkyl-substituted polyamine. The aliphatic substituent in such acylating agents preferably averages at least 30 or 50 and up to 400 carbon atoms.

Illustrative hydrocarbon-based substituent groups containing at least ten aliphatic carbon atoms are n-decyl, n-dodecyl, tetrapropenyl, n-octadecyl, oleyl, chlorooctadecyl and triicontanyl. Generally, the hydrocarbon-based substituents are made from homo- or interpolymers (e.g., copolymers, terpolymers) of mono- and diolefins having 2 to 10 carbon atoms, such as ethylene, propylene, butene-1, isobutene, butadiene, isoprene, 1-hexene and 1-octene. Typically, these olefins are 1-monoolefins. The substituent can also be derived from the halogenated (e.g., chlorinated or brominated) analogues of such homo- or interpolymers. The substituent can, however, be made from other sources, such as monomeric high molecular weight alkenes (e.g., 1-tetracontene) and chlorinated analogues and hydrochlorinated analogues thereof, aliphatic petroleum fractions, particularly paraffin waxes and cracked and chlorinated analogues and hydrochlorinated analogues thereof, white oils, synthetic alkenes such as those produced by the Ziegler-Natta process (e.g., poly(ethylene) greases) and other sources known to those skilled in the art. Any unsaturation in the substituent may be reduced or eliminated by hydrogenation according to procedures known in the art.

As used in this specification, the term "hydrocarbon-based" denotes a group having a carbon atom directly attached to the remainder of the molecule and having a predominantly hydrocarbon character within the context of this invention. Therefore, hydrocarbon-based groups can contain up to one non-hydrocarbon group for every ten carbon atoms provided this non-hydrocarbon group does not significantly alter the predominantly hydrocarbon character of the group. Those skilled in the art will be aware of such groups, which include, for example, hydroxyl, halo (especially chloro and fluoro), alkoxyl, alkyl mercapto and alkyl sulphoxy groups. Usually, however, the hydrocarbon-based substituents are purely hydrocarbyl and contain no such non-hydrocarbyl groups.

The hydrocarbon-based substituents are substantially saturated, that is, they contain no more than one carbon-to-carbon unsaturated bond for every ten carbon-to-carbon single bonds present. Usually, they contain no more than one carbon-to-carbon non-aromatic unsaturated bond for every 50 carbon-to-carbon bonds present.

The hydrocarbon-based substituents are also substantially aliphatic in nature, that is, they contain no more than one non-aliphatic moiety (cycloalkyl, cycloalkenyl or aromatic) group of six or less carbon atoms for every ten carbon atoms in the substituent. Usually, however, the substituents contain no more than one such non-aliphatic group for every fifty carbon atoms, and in many cases, they contain no such non-aliphatic groups at all; that is, the typical substituents are purely aliphatic. Typically, these purely aliphatic substituents are alkyl or alkenyl groups.

Specific examples of the substantially saturated hydrocarbon-based substituents containing an average of more than 30 carbon atoms are the following: a mixture of poly(ethylene/propylene) groups of 35 to 70 carbon atoms, a mixture of oxidatively or mechanically degraded poly(ethylene/propylene) groups of 35 to 70 carbon atoms, a mixture of poly(proplene/1-hexene) groups of 80 to 150 carbon atoms, and a mixture of polyisobutene groups having an average of 50 to 75 carbon atoms.

A preferred source of the substituents are polyisobutenes obtained by polymerisation of a C4 refinery stream having a butene content of 35 to 75 weight per cent and isobutene content of 30 to 60 weight per cent in the presence of a Lewis acid catalyst such as aluminium trichloride or boron trifluoride. These polyisobutenes contain predominantly (greater than 80% of total repeating units) isobutene repeating units of the configuration:

$$-C(CH_3)_2CH_2-$$

Exemplary of amino compounds useful in making the acylated compounds are the following:

(1) polyalkylene polyamines of the general formula:

$$(R^{14})_2N[P-N(R^{14})]_tR^{14} \qquad X$$

wherein each $R^{14}$ is independently a hydrogen atom, a hydrocarbyl group or a hydroxy-substituted hydrocarbyl group containing up to 30 carbon atoms, with the proviso that at least one $R^{14}$ is a hydrogen atom, t is a whole number of 1 to 10 and P is a $C_{1-18}$ alkylene group;

(2) hydroxyalkyl-substituted polyamines wherein the polyamines are as described above;

(3) heterocyclic-substituted polyamines wherein the polyamines are as described above and the heterocyclic substituent is derived from, for example, piperazine, imidazoline, pyrimidine or morpholine; and

(4) aromatic polyamines of the general formula:

$$Ar(NR^{14}{}_2)_z \qquad XI$$

wherein Ar is an aromatic nucleus of 6 to 20 carbon atoms, each $R^{14}$ is as defined above and z is 2 to 8.

Specific examples of polyalkylene polyamines of formula X are ethylene diamine, tetra(ethylene)pentamine, tri(trimethylene)-tetramine and 1,2-propylene diamine.

Specific examples of hydroxyalkyl-substituted polyamines include N-(2-hydroxyethyl) ethylene diamine, N,N'-bis-(2-hydroxyethyl) ethylene diamine and N-(3-hydroxybutyl) tetramethylene diamine.

Specific examples of heterocyclic-substituted polyamines are N-2-aminoethyl piperazine, N-2- and N-3-amino propyl morpholine, N-3-(dimethyl amino) propyl piperazine, 2-heptyl-3-(2-aminopropyl) imidazoline, 1,4-bis (2-aminoethyl) piperazine, 1-(2-hydroxy ethyl) piperazine, and 2-heptadecyl-1-(2-hydroxyethyl)-imidazoline.

Specific examples of aromatic polyamines are the various isomeric phenylene diamines and the various isomeric naphthalene diamines.

Many patents have described useful acylated nitrogen compounds including U.S. Patents Nos. 3,172,892, 3,219,666, 3,272,746, 3,310,492, 3,341,542, 3,444,170, 3,455,831, 3,455,832, 3,576,743, 3,630,904, 3,632,511, 3,804,763 and 4,234,435. A typical acylated nitrogen-containing compound of this class is that made by reacting a polyisobutene-substituted succinic anhydride acylating agent wherein the polyisobutene substituent has from 50 to 400 carbon atoms with a mixture of ethylene polyamines having 3 to 7 amino nitrogen atoms per ethylene polyamine.

Another type of acylated nitrogen compound belonging to this class is that made by reacting the aforementioned alkylene amines with the aforementioned substituted succinic acids or anhydrides and aliphatic monocarboxylic acids having from 2 to 22 carbon atoms. In these types of acylated nitrogen compounds, the mole ratio of succinic acid to monocarboxylic acid is in the range from 1:0.1 to 1:1. Typical of the monocarboxylic acids are formic acid, acetic acid, dodecanoic acid, butanoic acid, oleic acid, stearic acid, the commercial mixture of stearic acid isomers known as isostearic acid and tolyl acid. Such materials are more fully described in U.S. Patents Nos. 3,216,936 and 3,250,715.

Still another type of acylated nitrogen compound useful in the fuel compositions of the invention is the product of the reaction of a fatty monocarboxylic acid of 12 to 30 carbon atoms and the aforementioned alkylene amines, typically, ethylene, propylene or trimethylene polyamines containing 2 to 8 amino groups and mixtures thereof. The fatty monocarboxylic acids are generally mixtures of straight and branched chain fatty carboxylic acids containing 12 to 30 carbon atoms. A widely used type of acylated nitrogen compound is made by reacting the aforementioned alkylene polyamines with a mixture of fatty acids having from 5 to 30 mole per cent straight chain acid and 70 to 95 mole per cent branched chain fatty acids. Among the commercially available mixtures are those known widely in the trade as isostearic acid. These mixtures are produced as a by-product from the dimerisation of unsaturated fatty acids as described in U.S. Patents Nos. 2,812,342 and 3,260,671.

The branched chain fatty acids can also include those in which the branch is not alkyl in nature, such as found in phenyl and cyclohexyl stearic acid and the chloro-stearic acids. Branched chain fatty carboxylic acid/alkylene polyamine products have been described, for example, in U.S. Patents Nos. 3,110,673, 3,251,853, 3,326,801, 3,337,459, 3,405,064, 3,429,674, 3,468,639 and 3,857,791.

The phenol/aldehyde/amino compound condensates useful as dispersants in the fuel compositions of the invention include those generically referred to as Mannich condensates. Generally, they are made by reacting simultaneously or sequentially at least one active hydrogen compound such as a hydrocarbon-substituted phenol (e.g., an alkyl phenol wherein the alkyl group has at least an average of 12 to 400, preferably 30 to 400, carbon atoms), having at least one hydrogen atom bonded to an aromatic carbon, with at least one aldehyde or aldehyde-producing material (typically formaldehyde precursor) and at least one amino or polyamino compound having at least one NH group. The amino compounds include primary or secondary monoamines having hydrocarbon substituents of 1 to 30 carbon atoms or hydroxyl-substituted hydrocarbon substituents of 1 to 30 carbon atoms. Another type of typical amino compound are the polyamines described during the discussion of the acylated nitrogen-containing compounds.

Exemplary monoamines include methyl ethyl amine, methyl octadecyl amines, aniline, diethyl amine, diethanol amine and dipropyl amine. The following patents contain extensive descriptions of Mannich condensates: U.S. Patents Nos. 2,459,112, 3,413,347, 3,558,743, 2,962,442, 3,442,808, 3,586,629, 2,984,550, 3,448,047, 3,591,598, 3,036,003, 3,454,497, 3,600,372, 3,166,516, 3,459,661, 3,634,515, 3,236,770, 3,461,172, 3,649,229, 3,355,270, 3,493,520, 3,697,574, 3,368,972 and 3,539,633.

Condensates made from sulphur-containing reactants can also be used in the fuel compositions of the present invention. Such sulphur-containing condensates are described in U.S. Patents Nos. 3,368,972, 3,649,229, 3,600,372, 3,649,659 and 3,741,896. These patents also disclose sulphur-containing Mannich condensates. Generally the condensates used in making compositions of this invention are made from a phenol bearing an alkyl substituent of 6 to 400 carbon atoms, more typically, 30 to 250 carbon atoms. These typical condensates are made from formaldehyde or $C_{2-7}$ aliphatic aldehyde and an amino compound such as those used in making the acylated nitrogen-containing compounds described above.

These preferred condensates are prepared by reacting one molar portion of phenolic compound with 1 to 2 molar portions of aldehyde and 1 to 5 equivalent portions of amino compound (an equivalent of amino compound is its molecular weight divided by the number of -NH- groups present). The conditions under which such condensation reactions are carried out are well known to those skilled in the art.

A particularly preferred class of nitrogen-containing condensation products for use in the fuel compositions of the present invention are those made by (1) reacting at least one hydroxy aromatic compound containing an aliphatic-based or cycloaliphatic-based substituent which has at least 30 carbon atoms and up to 400 carbon atoms with a lower aliphatic $C_{1-7}$ aldehyde or reversible polymer thereof in the presence of an alkaline reagent, such as an alkali metal hydroxide, at a temperature up to 150°C; (2) substantially neutralising the intermediate reaction mixture thus formed; and (3) reacting the neutralised intermediate with at least one compound which contains an amino group having at least one -NH- group.

More preferably, these condensates are made from (a) phenols bearing a hydrocarbon-based substituent having 30 to 250 carbon atoms, said substituent being derived from a polymer of propylene, 1-butene, 2-butene, or isobutene and (b) formaldehyde, or reversible polymer thereof, (e.g., trioxane, paraformaldehyde) or functional equivalent thereof, (e.g., methylol) and (c) an alkylene polyamine such as ethylene polyamines having from 2 to 10 nitrogen atoms.

The esters useful as dispersants in the fuel compositions of the invention are derivatives of substituted carboxylic acids in which the substituent is a substantially aliphatic, substantially saturated hydrocarbon-based group containing at least 30, preferably at least 50, up to 750 aliphatic carbon atoms. As used herein, the term "hydrocarbon-based group" denotes a group having a carbon atom directly attached to the remainder of the molecule and having predominantly hydrocarbon character within the context of this invention. Such groups include the following:

(1) Hydrocarbon groups; that is, aliphatic groups, aromatic-andalicyclic-substituted aliphatic groups, and the like, of the type known to those skilled in the art.

(2) Substituted hydrocarbon groups; that is, groups containing non-hydrocarbon substituents which, in the context of this invention, do not alter the predominantly hydrocarbon character of the group. Those skilled in the art will be aware of suitable substituents; examples are halo, nitro, hydroxy, alkoxy, carbalkoxy and alkylthio.

(3) Hetero groups; that is, groups which, while predominantly hydrocarbon in character within the context of this invention, contain atoms other than carbon present in a chain or ring otherwise composed of carbon atoms. Suitable hetero atoms will be apparent to those skilled in the art and include, for example, nitrogen, oxygen and sulphur.

In general, no more than about three substituents or hetero atoms, and preferably no more than one, will be present for each 10 carbon atoms in the hydrocarbon-based group.

The substituted carboxylic acids are normally prepared by the alkylation of an unsaturated acid, or a derivative thereof such as an anhydride, with a source of the desired hydrocarbon-based group. Suitable unsaturated acids and derivatives thereof include acrylic acid, methacrylic acid, maleic acid, maleic anhydride, fumaric acid, itaconic acid, itaconic anhydride, citraconic acid, citraconic anhydride, mesaconic acid, glutaconic acid, chloromaleic acid, aconitic acid, crotonic acid, methylcrotonic acid, sorbic acid, 3-hexenoic acid, 10-decenoic acid and 2-pentene-1,3,5-tri-carboxylic acid. Particularly preferred are the unsaturated dicarboxylic acids and their derivatives, especially maleic acid, fumaric acid and maleic anhydride.

Suitable alkylating agents include homopolymers and inter-polymers of polymerisable olefin monomers containing from 2 to 10 and usually from 2 to 6 carbon atoms, and polar substituent-containing derivatives thereof. Such polymers are substantially saturated (i.e., they contain no more than about 5% olefinic linkages) and substantially aliphatic (i.e., they contain at least 80% and preferably at least 95% by weight of units derived from aliphatic monoolefins). Illustrative monomers which may be used to produce such polymers are ethylene, propylene, 1-butene, 2-butene, isobutene, 1-octene and 1-decene. Any unsaturated units may be derived from conjugated dienes such as 1,3-butadiene and isoprene; non-conjugated dienes such as 1,4-hexadiene, 1,4-cyclohexadiene, 5-ethylidene-2-norbornene and 1,6-octadiene; and trienes such as 1-isopropylidene-3a,4,7,7a-tetrahydroindene, 1-isopropylidene-dicyclopentadiene and 2-(2-methylene-4-methyl-3-pentenyl)[2.2.1]-bicyclo-5-heptene.

A first preferred class of polymers comprises those of terminal olefins such as propylene, 1-butene, isobutene and 1-hexene. Especially preferred within this class are polybutenes comprising predominantly isobutene units. A second preferred class comprises terpolymers of ethylene, a $C_{3-8}$ alpha-monoolefin and a polyene selected from the group consisting of non-conjugated dienes (which are especially preferred) and trienes. Illustrative of these terpolymers is "Ortholeum 2052" manufactured by E.I. duPont de Nemours & Company, which is a terpolymer containing about 48 mole per cent ethylene groups, 48 mole per cent propylene groups and 4 mole per cent 1,4-hexadiene groups and having an inherent viscosity of 1.35 (8.2 grams of polymer in 10 ml of carbon tetrachloride at 30°C).

Methods for the preparation of the substituted carboxylic acids and derivatives thereof are well known in the art and need not be described in detail. Reference is made, for example, to U.S. Patents Nos. 3,272,746, 3,522,179 and 4,234,435. The mole ratio of the polymer to the unsaturated acid or derivative thereof may be equal to, greater than or less than 1, depending on the type of product desired.

The esters are those of the above-described substituted carboxylic acids with hydroxy compounds which may be aliphatic compounds such as monohydric and polyhydric alcohols or aromatic compounds such as phenols and naphthols. Examples of aromatic hydroxy compounds include phenol, beta-naphthol, alpha-naphthol, cresol, resorcinol, catechol, p,p'-dihydroxybiphenyl, 2-chlorophenol, 2,4-dibutylphenol, propene tetramer-substituted phenol, didodecylphenol, 4,4'-methylene-bis-phenol, alpha-decylbeta-naphthol, polyisobutene (molecular weight of 1000)-substituted phenol, the condensation product of heptylphenol with formaldehyde, the condensation product of octyl-phenol with acetone, di(hydroxyphenyl)-oxide, di(hydroxyphenyl)sulphide, di(hydroxyphenyl)disulphide, and 4-cyclo-hexylphenol. Phenol and alkylated phenols having up to three alkyl substituents are preferred. Each of the alkyl substituents may contain 100 or more carbon atoms.

The aliphatic alcohols from which the esters may be derived preferably contain up to 40 aliphatic carbon

atoms. They may be monohydric alcohols such as methanol, ethanol, isooctanol, dodecanol, cyclohexanol, cyclopentanol, behenyl alcohol, hexatriacontanol, neopentyl alcohol, isobutyl alcohol, benzyl alcohol, betaphenylethyl alcohol, 2-methylcyclohexanol, beta-chloroethanol, monomethyl ether of ethylene glycol, monobutyl ether of ethylene glycol, monopropyl ether of diethylene glycol, monododecyl ether of triethylene glycol, monooleate of ethylene glycol, monostearate of diethylene glycol, secpentyl alcohol, tertbutyl alcohol, 5-bromo-dodecanol, nitro-octadecanol and dioleate of glycerol. The polyhydric alcohols preferably contain from 2 to 10 hydroxy radicals. They are illustrated by, for example, ethylene glycol, diethylene glycol, triethylene glycol, tetraethylene glycol, dipropylene glycol, tripropylene glycol, dibutylene glycol, tri-butylene glycol, and other alkylene glycols in which the alkylene radical contains from 2 to 8 carbon atoms. Other useful polyhydric alcohols include glycerol, monooleate of glycerol, monostearate of glycerol, monomethyl ether of glycerol, pentaerythritol, 9,10-dihydroxy stearic acid, methyl ester of 9,10-dihydroxy stearic acid, 1,2-butanediol, 2,3-hexanediol, 2,4-hexanediol, penacol, erythritol, arabitol, sorbitol, mannitol, 1,2-cyclohexanediol, and xylene glycol. Carbohydrates such as sugars, starches and cellulose may also yield esters useful in this invention. The carbohydrates may be exemplified by glucose, fructose, sucrose, rhamnose, mannose, glyceraldehyde and galactose.

An especially preferred class of polyhydric alcohols are those having at least three hydroxy radicals, some of which have been esterified with a monocarboxylic acid having from 8 to 30 carbon atoms, such as octanoic acid, oleic acid, stearic acid, linoleic acid, dodecanoic acid, or tall oil acid. Examples of such partially esterified polyhydric alcohols are the monooleate of sorbitol, distearate of sorbitol, monooleate of glycerol, monostearate of glycerol, di-dodecanoate of erythritol.

The esters may also be derived from unsaturated alcohols such as allyl alcohol, cinnamyl alcohol, propargyl alcohol, 1-cyclohexene-3-ol and oleyl alcohol. Still another class of the alcohols capable of yielding the esters useful in this invention comprise the ether-alcohols and amino-alcohols including, for example, the oxyalkylene-, oxyarylene-, amino-alkylene- and amino-arylene-substituted alcohols having one or more oxyalkylene, oxyarylene, amino-alkylene or amino-arylene radicals. They are exemplified by Cellosolve, carbitol, phenoxyethanol, heptylphenyl-$(oxypropylene)_6$-H, octyl-$(oxyethylene)_{30}$-H, phenyl-$(oxyoctylene)_2$-H, mono(heptylphenyl-oxypropylene)-substituted glycerol, poly(styrene oxide), amino-ethanol, 3-amino ethylpentanol, di(hydroxyethyl) amine, p-amino-phenol, tri(hydroxypropyl)amine, N-hydroxyethyl ethylene diamine and N,N,N',N'-tetrahydroxy-trimethylene diamine. For the most part, the ether-alcohols having up to about 150 oxyalkylene radicals in which the alkylene radical contains from 1 to 8 carbon atoms are preferred.

The esters may be diesters of succinic acids or acidic esters, i.e., partially esterified polyhydric alcohols or phenols, i.e., esters having free alcoholic or phenolic hydroxyl radicals. Mixtures of the above-illustrated esters likewise are contemplated within the scope of the invention.

The succinic acid esters may be prepared by one of several methods. The method which is preferred because of convenience and superior properties of the esters it produces, involves the reaction of a suitable alcohol or phenol with a substantially hydrocarbon-substituted succinic anhydride. The esterification is usually carried out at a temperature above about 100°C, preferably between 150°C and 300°C.

The water formed as a by-product is removed by distillation as the esterification proceeds. A solvent may be used in the esterification to facilitate mixing and temperature control. It also facilitates the removal of water from the reaction mixture. The useful solvents include xylene, toluene, diphenyl ether, chlorobenzene and mineral oil.

A modification of the above process involves the replacement of the substituted succinic anhydride with the corresponding succinic acid. However, succinic acids readily undergo dehydration at temperatures above about 100oC and are thus converted to their anhydrides which are then esterified by the reaction with the alcohol reactant. In this regard, succinic acids appear to be the substantial equivalent of their anhydrides in the process.

The relative proportions of the succinic reactant and the hydroxy reactant which are to be used depend to a large measure upon the type of the product desired and the number of hydroxyl groups present in the molecule of the hydroxy reactant. For instance, the formation of a half ester of a succinic acid, i.e., one in which only one of the two acid radicals is esterified, involves the use of one mole of a monohydric alcohol for each mole of the substituted succinic acid reactant, whereas the formation of a diester of a succinic acid involves the use of two moles of the alcohol for each mole of the acid. On the other hand, one mole of a hexahydric alcohol may combine with as many as six moles of a succinic acid to form an ester in which each of the six hydroxyl radicals of the alcohol is esterified with one of the two acid radicals of the succinic acid. Thus, the maximum proportion of the succinic acid to be used with a polyhydric alcohol is determined by the number of hydroxyl groups present in the molecule of the hydroxy reactant. For the purposes of this invention, it has been found that esters obtained by the reaction of equimolar amounts of the succinic acid reactant and hydroxy reactant have superior properties and are therefore preferred.

In some instances, it is advantageous to carry out the esterification in the presence of a catalyst such as sulphuric acid, pyridine hydrochloride, hydrochloric acid, benzenesulphonic acid, p-toluenesulphonic acid, phosphoric acid, or any other known esterification catalyst. The amount of the catalyst in the reaction may be as little as 0.01% (by weight of the reaction mixture), more often from 0.1% to 5%.

The succinic acid esters may alternatively be obtained by the reaction of a substituted succinic acid or anhydride with an epoxide or a mixture of an epoxide and water. Such reaction is similar to one involving the acid or anhydride with a glycol. For instance, the product may be prepared by the reaction of a substituted succinic acid with one mole of ethylene oxide. Similarly, the product may be obtained by the reaction of a substituted succinic acid with two moles of ethylene oxide. Other epoxides which are commonly available for use in such reaction include, for example, propylene oxide, styrene oxide, 1,2-butylene oxide, 2,3-butylene oxide, epichlorohydrin, cyclohexene oxide, 1,2-octylene oxide, epoxidised soya bean oil, methyl ester of 9,10-epoxystearic acid and butadiene mono-epoxide. For the most part, the epoxides are the alkylene oxides in which the alkylene radical has from 2 to 8 carbon atoms; or the epoxidised fatty acid esters in which the fatty acid radical has up to 30 carbon atoms and the ester radical is derived from a lower alcohol having up to 8 carbon atoms.

In lieu of the succinic acid or anhydride, a lactone acid or a substituted succinic acid halide may be used in the processes illustrated above. Such acid halides may be acid dibromides, acid dichlorides, acid monochlorides, and acid monobromides. The substituted succinic anhydrides and acids can be prepared by, for example, the reaction of maleic anhydride with a high molecular weight olefin or a halogenated hydrocarbon such as is obtained by the chlorination of an olefin polymer described previously. The reaction involves merely heating the reactants at a temperature preferably from 100°C to 250°C. The product from such a reaction is an alkenyl succinic anhydride. The alkenyl group may be hydrogenated to an alkyl group. The anhydride may be hydrolysed by treatment with water or steam to the corresponding acid. Another method useful for preparing the succinic acids or anhydrides involves the reaction of itaconic acid or anhydride with an olefin or a chlorinated hydrocarbon at a temperature usually within the range from 100°C to 250°C. The succinic acid halides can be prepared by the reaction of the acids or their anhydrides with a halogenation agent such as phosphorous tribromide, phosphorus pentachloride, or thionyl chloride. These and other methods of preparing the succinic compounds are well known in the art and need not be illustrated in further detail here.

Still further methods of preparing esters useful in the fuel compositions of the present invention are available. For instance, the esters may be obtained by the reaction of maleic acid or anhydride with an alcohol such as is illustrated above to form a mono- or diester of maleic acid and then the reaction of this ester with an olefin or a chlorinated hydrocarbon such as is illustrated above. They may also be obtained by first esterifying itaconic anhydride or acid and subsequently reacting the ester intermediate with an olefin or a chlorinated hydrocarbon under conditions similar to those described hereinabove.

A large number of different types of polymeric dispersants have been suggested as useful in lubricating oil formulations, and such polymeric dispersants are useful in the fuel compositions of the present invention. Often, such additives have been described as being useful in lubricating formulations as viscosity index improvers with dispersing characteristics. The polymeric dispersants generally are polymers or copolymers having a long carbon chain and containing "polar" groups to impart the dispersancy characteristics. Examples of polar groups include amino, amido, imino, imido, hydroxyl and ether groups. For example, the polymeric dispersants may be copolymers of methacrylates or acrylates containing additional polar groups, ethylene/propylene copolymers containing polar groups or vinyl acetate/fumaric acid ester copolymers.

Many such polymeric dispersants have been described in the prior art, for example in U.S. Patents Nos. 4,402,844, 3,356,763 and 3,891,721.

A number of the polymeric dispersants may be prepared by grafting polar monomers on to polyolefinic backbones. For example, U.S. Patents Nos. 3,687,849 and 3,687,905 describe the use of maleic anhydride as a graft monomer to a polyolefinic backbone. Maleic acid or anhydride is particularly desirable as a graft monomer because this monomer is relatively inexpensive, provides an economical route to the incorporation of dispersant nitrogen compounds into polymers by further reaction of the carboxyl groups of the maleic acid or anhydride with, for example, nitrogen compounds or hydroxy compounds. U.S. Patent No. 4,160,739 describes graft copolymers obtained by the grafting of a monomer system comprising maleic acid or anhydride and at least one other different monomer which is addition copolymerisable therewith; the grafted monomer system then being post-reacted with a polyamine. The monomers which are copolymerisable with maleic acid or anhydride are any alpha, beta-monoethylenically unsaturated monomers which are sufficiently soluble in the reaction medium and reactive towards maleic acid or anhydride so that substantially larger amounts of maleic acid or anhydride can be incorporated into the grafted polymeric product. Accordingly, suitable monomers include the esters, amides and nitriles of acrylic and methacrylic acid, and monomers containing no free acid groups. The incorporation of heterocyclic monomers into graft polymers is described by a process which

comprises a first step of graft polymerising an alkyl ester of acrylic acid or methacrylic acid, alone or in combination with styrene, onto a backbone copolymer which is a hydrogenated block copolymer of styrene and a conjugated diene having 4 to 6 carbon atoms to form a first graft polymer. In the second step, a polymerisable heterocyclic monomer, alone or in combination with a hydrophobising vinyl ester is co-polymerised onto the first graft copolymer to form a second graft copolymer.

Other patents describing graft polymers useful as dispersants in the fuel compositions of this invention include U.S. Patents Nos. 3,243,481, 3,475,514, 3,723,575, 4,026,167, 4,085,055, 4,181,618 and 4,476,283.

Another class of polymeric dispersant useful in the fuel compositions of the invention are the so-called "star" polymers and copolymers. Such polymers are described in, for example U.S. Patents Nos. 4,346,193, 4,141,847, 4,358,565, 4,409,120 and 4,077,893.

The hydrocarbon-substituted phenolic dispersants useful in the fuel compositions of the present invention include the hydrocarbon-substituted phenolic compounds wherein the hydrocarbon substituents have a molecular weight which is sufficient to render the phenolic compound fuel soluble. Generally, the hydrocarbon substituent will be a substantially saturated, hydrocarbon-based group of at least 30 carbon atoms. The phenolic compounds may be represented generally by the following formula:

$$(R^{15})\text{-}Ar^{1}\text{-}(OH) \qquad XII$$

wherein $R^{15}$ is a substantially saturated hydrocarbon-based substituent having an average of from 30 to 400 aliphatic carbon atoms, and g and h are each 1, 2 or 3. Arl is an aromatic moiety such as a benzene nucleus, naphthalene nucleus or linked benzene nuclei. Optionally, the above phenates as represented by formula XII may contain other substituents such as lower alkyl, lower alkoxy, nitro, amino and halo groups. Preferred examples of optional substituents are the nitro and amino groups.

The substantially saturated hydrocarbon-based group $R^{15}$ in formula XII may contain up to 750 aliphatic carbon atoms although it usually has a maximum of an average of 400 carbon atoms. In some instances $R^{15}$ has a minimum of 50 carbon atoms. As noted, the phenolic compounds may contain more than one $R^{15}$ group for each aromatic nucleus in the aromatic moiety $Ar^1$.

Generally, the hydrocarbon-based groups $R^{15}$ are derived from homo- or interpolymers (e.g., copolymers, terpolymers) of mono- and diolefins having 2 to 10 carbon atoms, such as ethylene, propylene, butene-1, isobutene, butadiene, isoprene, 1-hexene and 1-octene. Typically, these olefins are 1-monoolefins. The $R^{15}$ groups can also be derived from the halogenated (e.g., chlorinated or brominated) analogues of such homo- or interpolymers. The $R^{15}$ groups can, however, be made from other sources, such as monomeric high molecular weight alkenes (e.g. 1-tetracontene) and chlorinated analogues and hydrochlorinated analogues thereof, aliphatic petroleum fractions, particularly paraffin waxes and cracked and chlorinated analogues and hydrochlorinated analogues thereof, white oils, synthetic alkenes such as those produced by the Ziegler-Natta process (e.g., poly(ethylene) greases) and other sources known to those skilled in the art. Any unsaturation in the $R^{15}$ groups may be reduced or eliminated by hydrogenation according to procedures known in the art before the nitration step described hereafter.

Specific examples of the substantially saturated hydrocarbon-based $R^{15}$ groups are the following: a tetracontanyl group, a henpentacontanyl group, a mixture of poly(ethylene/propylene) groups of 35 to 70 carbon atoms, a mixture of oxidatively or mechanically degraded poly(ethylene/propylene) groups of 35 to 70 carbon atoms, a mixture of poly(propylene/1-hexene) groups of 80 to 150 carbon atoms, a mixture of polyisobutene groups having 20 to 32 carbon atoms, and a mixture of polyisobutene groups having an average of 50 to 75 carbon atoms.

A preferred source of the group $R^{15}$ are polyisobutenes obtained by polymerisation of a $C_4$ refinery stream having a butene content of 35 to 75 weight per cent and isobutene content of 30 to 60 weight per cent in the presence of a Lewis acid catalyst such as aluminium trichloride or boron trifluoride. These polyisobutenes contain predominatly (greater than 80% of total repeat units) isobutene repeating units of the configuration.

$$-C(CH_3)_2CH_2-$$

The attachment of the hydrocarbon-based group $R^{15}$ to the aromatic moiety $Ar^1$ can be accomplished by a number of techniques well known to those skilled in the art.

In one preferred embodiment, the phenolic dispersants useful in the fuel compositions of the present invention are hydrocarbon-substituted nitro phenols as represented by formula XII wherein the optional substituent is one or more nitro groups. The nitro phenols can be conveniently prepared by nitrating appropriate phenols, and typically, the nitro phenols are formed by nitration of alkyl phenols having an alkyl group of at least 30 and preferably at least 50 carbon atoms. The preparation of a number of hydrocarbon-substituted nitro phenols useful in the fuel compositions of the present invention is described in U.S. Patent No. 4,347,148.

In another preferred embodiment, the hydrocarbon-substituted phenol dispersants useful in the present invention are hydrocarbon-substituted amino phenols such as represented by formula XII wherein the optional substituent is one or more amino groups. These amino phenols can conveniently be prepared by nitrating an

appropriate hydroxy aromatic compound as described above and thereafter reducing the nitro groups to amino groups. Typically, the useful amino phenols are formed by nitration and reduction of alkyl phenols having an alkyl or alkenyl group of at least 30 and preferably at least 50 carbon atoms. The preparation of a large number of hydrocarbon-substituted amino phenols useful as dispersants in the present invention is described in U.S. Patent No. 4,320,021.

Also useful as dispersants in the fuel compositions of the present invention are fuel-soluble alkoxylated derivatives of alcohols, phenols and amines. A wide variety of such derivatives can be utilised as long as the derivatives are fuel-soluble. More preferably, the derivatives in addition to being fuel-soluble should be water-insoluble. Accordingly, in a preferred embodiment, the fuel-soluble alkoxylated derivatives useful as the dispersants are characterised as having an HLB of from 1 to 13.

As is well known to those skilled in the art, the fuel-solubility and water-insolubility characteristics of the alkoxylated derivatives can be controlled by selection of the alcohol, phenol or amine, selection of the particular alkoxy reactant, and by selection of the amount of alkoxy reactant which is reacted with the alcohol, phenol or amine. Accordingly, the alcohols which are utilised to prepare the alkoxylated derivatives are hydrocarbon-based alcohols while the amines are hydrocarbyl-substituted amines as described above. The phenols may be phenols or hydrocarbon-substituted phenols and the hydrocarbon substituent may contain as few as 1 carbon atom.

The alkoxylated derivatives are obtained by reacting the alcohol, phenol or amine with an epoxide or a mixture of an epoxide and water. For example, the derivative may be prepared by the reaction of the alcohol, phenol or amine with an equal molar amount or an excess of ethylene oxide. Other epoxides which can be reacted with the alcohol, phenol or amine include, for example, propylene oxide, styrene oxide, 1,2-butylene oxide, 2,3-butylene oxide, epichlorohydrin, cyclohexene oxide and 1,2-octylene oxide. Preferably, the epoxides are the alkylene oxides in which the alkylene group has from 2 to 8 carbon atoms. As mentioned above, it is desirable and preferred that the amount of alkylene oxide reacted with the alcohol, phenol or amine be insufficient to render the derivative water-soluble.

The following are examples of commercially available alkylene oxide derivatives which may be utilised as dispersants in the fuel compositions of the present invention: Ethomeen S/12, tertiary amines ethylene oxide condensation products of the primary fatty amines (HLB, 4.15; Armak Industries); and Plurafac A-24, an oxyethylated straight-chain alcohol available from BASF Wyandotte Industries (HLB 5.0). Other suitable fuel-soluble alkoxylated derivatives of alcohols, phenols and amines will be readily apparent to those skilled in the art.

In a particularly preferred embodiment, further to the compound of formula I, the fuel composition of the invention may additionally contain, as ashless dispersant, a minor amount of a polyolefin-substituted succinimide derivative wherein the polyolefin has number average molecular weight ($M_n$) in the range 800 to 5000, preferably 1000 to 5000, more preferably at least 1750, 1800 or 1850 and at most 4000, 3500, 3000 or 2500. The amine from which the succinimide is formed is preferably a $C_{1-30}$ amine, especially a $C_{4-12}$ amine containing 3 to 7 nitrogen atoms, e.g. diethylene triamine, triethylene tetramine, tetramethylene pentamine, pentaethylene hexamine, hexaethylene heptamine, tripropylene tetramine and mixtures of any 2 or more thereof.

Preferably the hydrocarbon-soluble ashless dispersant is present in an amount in the range 30 to 500 ppmw, more preferably 100 to 300 ppmw, based on total composition.

The fuel composition may additionally include (e.g. as an alternative to inclusion of succinimide derivative) an oil soluble polyamine as described in EP-A-290 088 or an N-substituted carbamate as described in EP-A-414 963, in each case in similar quantities to those described therein.

The fuel composition may further include, as flame-speed improver, an alkali metal or alkaline earth metal salt of a succinic acid derivative as described in EP-A-290 088, in similar quantities to those described therein.

Apart from components already described above, the fuel composition may also contain other additives. Thus, it can contain a lead compound as an anti-knock additive, and accordingly the fuel composition according to the invention includes both leaded and unleaded gasoline. The fuel composition can also contain antioxidants such as phenolics, e.g. 2,6-di-tert-butyl-phenol, or phenylenediamines, e.g. N,N'-di-sec-butyl-p-phenylene-diamine, or antiknock additives other than lead compounds, or polyether amino additives, e.g. as described in U.S. Patent No. 4,477,261 and EP-A-151 621.

In the fuel composition according to the invention, the fuel used is preferably gasoline, i.e. a hydrocarbon base fuel boiling essentially in the gasoline boiling range from 30 to 230°C. Such a base fuel may comprise mixtures of saturated, olefinic and aromatic hydrocarbons. It can be derived from straight-run gasoline, synthetically produced aromatic hydrocarbon mixtures, thermally or catalytically cracked hydrocarbon feedstocks, hydrocracked petroleum fractions or catalytically reformed hydrocarbons. The octane number of the base fuel is not critical and will generally be above 65. In the gasoline, hydrocarbons can be replaced up to substantial

amounts by alcohols, ethers, ketones, or esters. Naturally, the base fuel is desirably substantially free of water, since water may impede a smooth combustion.

This invention is illustrated by the following examples, in which the number average molecular weights ($M_n$) quoted were, unless otherwise indicated, determined by gel permeation chromatography (GPC) against polystyrene and polypropylene glycol standards.

The following terms used in the Examples are explained below.

Polyglycol I - a $C_{12}$ - $C_{15}$ linear alcohol initiated propylene oxide homopolymer of number average molecular weight ($M_n$) 1500;

Polyglycol II - a $C_{14}$ - $C_{15}$ linear alcohol initiated propylene oxide homopolymer of number average molecular weight ($M_n$) 1500;

Polyglycol III - a butanol initiated 85 wt% propylene oxide/15 wt% ethylene oxide random copolymer of number average molecular weight ($M_n$) 2000;

Polyglycol IV - a butanol initiated 85 wt% propylene oxide/15 wt% ethylene oxide random copolymer of number average molecular weight ($M_n$) 2500;

Polyglycol V - a polyethylene glycol initiated 50 wt% propylene oxide/50 wt% ethylene oxide partially random/partially block copolymer of number average molecular weight ($M_n$) 2000;

Polyglycol VI - a $C_{12}$ - $C_{15}$ linear alcohol initiated propylene oxide homopolymer of number average molecular weight ($M_n$) 500.

"VERSATIC" 5 (trade mark) acid (2,2-dimethylpropanoic acid) which is commercially available from member companies of the Royal Dutch/Shell Group.

"VERSATIC" 10 (trade mark) acid - a mixture of branched carboxylic acids of general formula

$$R^5-\underset{R^6}{\overset{R^4}{C}}-CO_2H \qquad (III')$$

where $R^4$ represents a group of formula $C_aH_{2a}$- ; $R^5$ represents a group of formula $C_bH_{2b+1}$- ; $R^6$ represents a group of general formula $C_cH_{2c+1}$-; and a + b + c = 8, which is commercially available from member companies of the Royal Dutch/Shell Group.

Polyglycol PE6100 - an ethylene oxide/propylene oxide/ethylene oxide block copolymer of number average molecular weight ($M_n$) 2000 (method of $M_n$ determination unknown). This material corresponds to "PLURONIC" (trade mark) PL-61 polyol available from Wyandotte Chemical Company.

Polyglycol PE8100 - an ethylene oxide/propylene oxide/ethylene oxide block copolymer of number average molecular weight ($M_n$) 2600 (method of $M_n$ determination unknown). This material corresponds to "PLURONIC" (trade mark) PL-81 polyol available from Wyandotte Chemical Company.

## Example 1

**Preparation of ester of Polyglycol I and "VERSATIC" 10 (trade mark) acid (a compound of formula I in which $R^1$is $C_{12}$-$C_{15}$alkyl, A is -O-, X is a polyoxypropylene chain and $R^2$is a group of formula III in which a + b + c = 8)**

To a solution of the Polyglycol I (300g, 0.21M) in toluene (150ml) in a round-bottomed 3-necked flask was added anhydrous potassium carbonate (34.5g, 0.25M) followed by the acid chloride derivative of "VERSATIC" 10 (trade mark) acid (47.6g, 0.25M) with stirring at ambient temperature (20°C). The flask was fitted with an overhead stirrer, a thermometer and a condenser and immersed in an oil bath. The mixture was refluxed at a temperature of about 120 - 130°C for 16 hours. The crude reaction mixture was then allowed to cool to ambient temperature and filtered through a sintered glass funnel. The excess solvent was then removed in vacuo. The crude product was then stirred with sodium carbonate (50g, 0.3M) and water (5ml) for 8 hours. The mixture was then diluted with toluene (150ml) and filtered. The resultant solution was dried over anhydrous sodium sulphate (50g), filtered and the solution concentrated in vacuo to afford the required product (315g, 95% yield).

## Example 2 to 19

By processes analogous to the process of Example 1, the polyglycols and carboxylic acid derivatives noted in Table 1 were reacted to prepare further compounds of general formula I according to the invention.

**Example 20**

**Preparation of Adipate ester of Polyglycol I (a compound of formula I in which $R^1$is $C_{12}$-$C_{15}$alkyl, A is -O-, X is a polyoxypropylene chain and R2 is a group -$(CH_2)_4C(o)$-Y-A'-$R^7$ where $R^7$, A' and Y have the same definitions respectively as R', A and X)**

To a mixture of the Polyglycol I (300g, 0.2M) and Adipic acid (15.5g, 0.1M) in a round-bottomed 3-necked flask fitted with a Dean and Stark trap was added, with stirring, under nitrogen, toluene (150ml) and para-Toluene sulphonic acid (9.5g, 0.05M). The resulting mixture was stirred under nitrogen for 16 hours at 130°C, before being cooled to ambient temperature (20°C), washed with 1M aqueous potassium hydroxide solution (3 x 200ml), washed with 10%w/v aqueous sodium sulphate solution (5 x 200ml), dried over anhydrous sodium sulphate ($Na_2SO_4$), filtered and evaporated under reduced pressure. The crude product was then stirred with sodium carbonate (50g, 0.3M) and water (5ml) for 8 hours. The mixture was then diluted with toluene (150ml) and filtered. The resultant solution was dried over anhydrous sodium sulphate (50g), filtered and the solution concentrated in vacuo to afford the required product (248g, 80% yield).

**Example 21**

**Preparation of ester of Polyglycol II and "VERSATIC" 5 (trade mark) acid (a compound of formula I in which $R^1$is $C_{14}$-$C_{15}$alkyl, A is -O-, X is a polyoxypropylene chain and $R^2$is t-butyl)**

To a mixture of the Polyglycol II (150g, 0.1M) and pyridine (150ml) in a round bottomed flask was added the anhydride derivative of "VERSATIC" 5 (trade mark) acid (46.5g, 0.25M). The resulting mixture was refluxed for 14 hours, before being cooled to ambient temperature, poured into water (400ml) and extracted into 60-80 petroleum spirit (3 x 200ml). The organic phase was washed with water (3 x 200ml), dried over anhydrous sodium sulphate ($Na_2SO_4$), filtered and evaporated under reduced pressure. The crude product was then stirred with sodium carbonate (50g, 0.3M) and water (5ml) for 8 hours. The mixture was then diluted with toluene (150ml) and filtered. The resultant solution was dried over anhydrous sodium sulphate (50g), filtered and the solution concentrated in vacuo to afford the required product (119g, 75% yield).

**Example 22**

**Preparation of ester of Polyglycol VI and "VERSATIC" 10 (trade mark) acid (a compound of formula I in which $R^1$is $C_{12}$-$C_{15}$alkyl, A is -O-, X is a polyoxypropylene chain and $R^2$is a group of formula III in which a + b + c = 8)**

To a solution of the Polyglycol VI (150g, 0.25M) in toluene (150ml) in a round-bottomed 3-necked flask was added triethylamine (35.4g, 0.35M) followed by the acid chloride derivative of "VERSATIC" 10 (trade mark) acid (66.7g, 0.35M) with stirring at ambient temperature. The flask was fitted with an overhead stirrer, a thermometer and a condenser and immersed in an oil bath. The mixture was refluxed at a temperature of about 120 - 130°C for 7 hours. The crude reaction mixture was then allowed to cool at ambient temperature, washed with water (3 x 200ml), dried over anhydrous sodium sulphate ($Na_2SO_4$), filtered and the solvent evaporated under reduced pressure. The crude product was then stirred with sodium carbonate (50g, 0.3M) and water (5ml) for 8 hours. The mixture was then diluted with toluene (150ml) and filtered. The resultant solution was dried over anhydrous sodium sulphate (50g), filtered and the solution concentrated in vacuo to afford the required product (150g, 80% yield).

**Comparative Examples C1 to C4**

By processes analogous to the process of Example 1, the polyglycols and carboxylic acid derivatives noted in Table 2 were reacted to prepare other substituted polyoxyalkylene compounds for comparison with the compounds of the invention.

**Comparative Example C5**

**Preparation of bis - oleic acid ester of Polyglycol PE6100**

To a solution of the Polyglycol PE6100 (300g, 0.15M) in toluene (200ml) in a round-bottomed 3-necked flask was added para-toluene sulphonic acid (0.6g) and Oleic acid (120g, 3 equiv) with stirring under nitrogen. The flask was fitted with an overhead stirrer and a Dean and Stark trap. The mixture was heated to reflux at a temperature of 119°C for 8 hours. The toluene was removed by heating the flask contents to a temperature of 150°C and passing a stream of nitrogen therethrough at a rate of 1,500cc/min.

## Comparative Example C6

**Preparation of bis - oleic acid ester of Polyglycol PE8100**

To a solution of Polyglycol PE8100 (300g, 0.108M) in toluene (400 ml) in a round-bottomed 3-necked flask was added para-toluene sulphonic acid (0.3g) and Oleic acid (87g, 3 equiv) with stirring under nitrogen. The flask was fitted with an overhead stirrer and a Dean and Stark trap. The mixture was heated to reflux at a temperature of 118°C for 7 hours. The toluene was removed by heating the flask contents to a temperature of 150°C and passing a stream of nitrogen therethrough at a rate of 1,500cc/min.

## Assessment of Polyoxyalkylene compounds

The following assessments of the compounds of Examples 1 to 22 and Comparative Examples C1 to C6 were undertaken. Results are provided in Tables 3, 4 and 5.

(i) Total Acid Number (TAN)

The TAN of a material is the quantity of base, expressed in milligrams of potassium hydroxide (mg KOH), that is required to neutralise all acidic constituents present in 1 gram of the material. The TAN is obtained by standard test method ASTM D664-81.

(ii) Kinematic viscosity at 40°C and at 100°C was determined according to standard test method ASTM D445.

(iii) Viscosity Index was calculated according to standard test method ASTM D2270-86.

(iv) Package Stability Test Background

Standard lubricant additive packages contain inter alia, one or more metal detergents. The packages fall into two categories: single metal (e.g. calcium only) formulations and mixed metal (e.g. calcium and magnesium formulations. Ideally, any potential rust inhibitor should be capable of working in both single metal and mixed metal formulations.

### Procedure

Test samples were prepared by incorporating each of the compounds of Examples 1 to 16, 18 to 22 and Comparative Examples C1 to C5 into one or both of two commercially available lubricant additive packages containing metal detergents, at a concentration of 3wt%. One of the additive packages was of the single metal type (calcium only), whilst the other was of the mixed metal type (calcium and magnesium). The test samples were stored at 60°C for up to three months and the relative stability of the samples measured.

Tables 3 and 4 list the results in terms of either deposit (D) or haze (H) of the samples. The terms "TD" and "VSH" used in the Tables mean "trace deposit" and "very slight haze". The Tables also note the "storage time" after which measurements were taken.

(v) Neutralisation Rate Test Background

U.S. Patent No. 3,933,662 (Chevron) describes a method for ranking candidate rust fix additives by means of a neutralisation rate test which it suggests can be correlated to results from rust engine tests, e.g. Sequence IIB engine test. The method involves neutralisation of an acidic aqueous phase with a basic oil phase and monitoring the progress of neutralisation using a pH meter.

### Procedure

Each of the compounds of Examples 1 to 22 and Comparative Examples C1 to C6 was incorporated into samples of the two lubricant additive packages described above for the Package Stability Test, at a concentration of 3wt%. The resulting concentrates were then blended at a concentration of 10wt% with a base oil being a mixture of "HVI" 60 (trade mark) base oil (a bright and clear high viscosity index base oil having kinematic viscosity at 100°C of 4.4 to 4.9 $mm^2/s$ (ASTM D445) and minimum flash point of 204°C (ASTM D92)) and "HVI" 115 (trade mark) base oil (a bright and clear high viscosity index base oil having kinematic viscosity at 100°C of 8.2 to 9.2 mm2/s (ASTM D445) and minimum flash point of 232°C (ASTM D92)), the weight ratio of "HVI" 60 (trade mark) base oil to "HVI" 115 base oil in the mixture being 5:1. The resulting oils were then tested as follows.

A 250ml 3-necked round-bottomed flask was fitted with a combined pH electrode and an overhead stirrer. The flask was immersed to a set level in a constant temperature oil bath at 50°C. Hydrochloric acid (0.01M; 30ml) was charged to the flask and allowed to reach constant temperature (30 minutes). The test oil (20ml)

was then introduced to the flask using a syringe and the pH measured after ten minutes.

Tables 3 and 4 list the pH values obtained.

It will be seen from Tables 3 and 4 that, whereas the neutralisation rate test results indicate that the compounds of Examples 1 to 22 (compounds of formula I according to the invention) would possess comparable rust fix properties to the compounds of Comparative Examples C1 to C6, the package stability test results clearly show that the additive concentrates (packages) of the invention containing the compounds of formula I had good storage stability, whilst those containing the comparative compounds were insufficiently stable.

(vi) Sequence IID Engine Test Procedure

A series of oils prepared as described above for the neutralisation rate test containing the compounds of Examples 1, 4, 7 and 14 were tested in the Sequence IID Engine Test to evaluate the rust fix properties of these compounds. In this test, a figure of 8.5 or above represents a pass. The results obtained are shown in Table 5 below.

**TABLE 1**

| EXAMPLE NO. | POLYGLYCOL TYPE | CARBOXYLIC ACID DERIVATIVE | RATIO OF MOLES OF REACTANTS (ACID DERIVATIVE TO POLYGLYCOL) |
|---|---|---|---|
| 1 | I | "VERSATIC" 10 [$(R^4)(R^5)(R^6)CCOCl$] | 1.2 |
| 2 | II | "VERSATIC" 10 [$(R^4)(R^5)(R^6)CCOCl$] | 1.2 |
| 3 | III | "VERSATIC" 10 [$(R^4)(R^5)(R^6)CCOCl$] | 2 |
| 4 | I | $(CH_3)_3CCOCl$ | 1.2 |
| 5 | III | $(CH_3)_3CCOCl$ | 1.2 |
| 6 | IV | $(CH_3)_3CCOCl$ | 1.2 |
| 7 | VI | $(CH_3)_3CCOCl$ | 1.2 |
| 8 | I | $CH_3(CH_2)_8COCl$ | 1.1 |
| 9 | III | $CH_3(CH_2)_8COCl$ | 1.1 |
| 10 | I | $CH_3(CH_2)_3CH(C_2H_5)COCl$ | 1.2 |
| 11 | III | $CH_3(CH_2)_3CH(C_2H_5)COCl$ | 1.1 |
| 12 | I | $CH_3(CH_2)_{14}COCl$ | 1.2 |
| 13 | III | $CH_3(CH_2)_{14}COCl$ | 1.2 |
| 14 | I | $CH_3(CH_2)_{16}COCl$ | 1.3 |
| 15 | III | $CH_3(CH_2)_{16}COCl$ | 1.1 |
| 16 | I | $C_6H_5CH_2COCl$ | 1.3 |
| 17 | III | $C_6H_5CH_2COCl$ | 1.2 |

**TABLE 1 (cont'd)**

| EXAMPLE NO. | POLYGLYCOL TYPE | CARBOXYLIC ACID DERIVATIVE | RATIO OF MOLES OF REACTANTS (ACID DERIVATIVE TO POLYGLYCOL) |
|---|---|---|---|
| 18 | I | $C_6H_5COCl$ | 1.3 |
| 19 | III | $C_6H_5COCl$ | 1.2 |
| 20 | I | $HOOC(CH_2)_4COOH$ | 0.5 |
| 21 | II | "VERSATIC" 5 $[(CH_3)_3CCO]_2O$ | 2.5 |
| 22 | VI | "VERSATIC" 10 $[(R^4)(R^5)(R^6)CCOCl]$ | 1.4 |

**TABLE 2**

| EXAMPLE NO. | POLYGLYCOL TYPE | CARBOXYLIC ACID DERIVATIVE | RATIO OF MOLES OF REACTANTS (ACID DERIVATIVE TO POLYGLYCOL) |
|---|---|---|---|
| C1 | V | "VERSATIC" 10 [$(R^4)(R^5)(R^6)CCOCl$] | 2 |
| C2 | V | "VERSATIC" 10 [$(R^4)(R^5)(R^6)CCOCl$] | 4 |
| C3 | V | $(CH_3)_3CCOCl$ | 1 |
| C4 | V | $(CH_3)_3CCOCl$ | 2 |
| C5 | PE6100 | $CH_3(CH_2)_7CH=CH(CH_2)_7CO_2H$ | 3 |
| C6 | PE8100 | $CH_3(CH_2)_7CH=CH(CH_2)_7CO_2H$ | 3 |

**TABLE 3**

| EXAMPLE NUMBER | TAN mgKOH/g | KINEMATIC VISCOSITY AT 40°C cSt ($mm^2/s$) | KINEMATIC VISCOSITY AT 100°C cSt ($mm^2/s$) | VISCOSITY INDEX | pH NEUTRALISATION | | PACKAGE STABILITY TEST | | STORAGE TIME (MONTHS) |
|---|---|---|---|---|---|---|---|---|---|
| | | | | | ALL CALCIUM | MIXED METAL | ALL CALCIUM | MIXED METAL | |
| 1 | 0.04 | 91.8 | 17.0 | 202 | 6.4 | 7.1 | 3%H | TD | 3 |
| 2 | 0.05 | 93.0 | 16.8 | 196 | 5.6 | 6.9 | 3%H | | 3 |
| 3 | 0.10 | 159.3 | 28.1 | 216 | 6.8 | 7.2 | 15%H | 12%H | 3 |
| 4 | 0.06 | 75.9 | 14.8 | 206 | 6.3 | 7.0 | 15%H | 15%H | 3 |
| 5 | 0.04 | 142.8 | 27.1 | 228 | 6.6 | 7.0 | 1%H | 10%H | 3 |
| 6 | 0.03 | 216.2 | 43.8 | 258 | 6.2 | 7.0 | 6%H | 10%H | 3 |
| 7 | 0.05 | 18.9 | 4.9 | 197 | 5.0 | 5.4 | 4%H | TD | 3 |
| 8 | 0.05 | 72.2 | 15.0 | 219 | 6.0 | 7.1 | 10%H | 1%H | 3 |
| 9 | 0.05 | 128.9 | 25.5 | 233 | 6.7 | 7.2 | 3%H | 10%H | 3 |
| 10 | 0.05 | 82.9 | 16.0 | 208 | 6.3 | 6.9 | | VSH | 3 |
| 11 | 0.10 | 135.7 | 25.5 | 224 | 6.7 | 7.1 | | 15%H | 3 |
| 12 | 0.05 | 90.3 | 17.6 | 214 | 6.2 | 6.8 | | VSH | 3 |
| 13 | 0.10 | 135.0 | 26.2 | 231 | 6.7 | 7.2 | | 15%H | 3 |
| 14 | 0.10 | 92.8 | 18.1 | 215 | 5.9 | 7.0 | | TD | 3 |

**TABLE 3 (cont'd**

| EXAMPLE NUMBER | TAN mgKOH/g | KINEMATIC VISCOSITY AT 40°C cSt ($mm^2/s$) | KINEMATIC VISCOSITY AT 100°C cSt ($mm^2/s$) | VISCOSITY INDEX | pH NEUTRALISATION | | PACKAGE STABILITY TEST | | STORAGE TIME (MONTHS) |
|---|---|---|---|---|---|---|---|---|---|
| | | | | | ALL CALCIUM | MIXED METAL | ALL CALCIUM | MIXED METAL | |
| 15 | 0.10 | 140.1 | 26.8 | 229 | 6.6 | 7.0 | | 15%H | 3 |
| 16 | 0.05 | 86.0 | 16.1 | 201 | 6.4 | 6.7 | | TD | 3 |
| 17 | 0.05 | 139.4 | 25.5 | 218 | 6.6 | 7.2 | | 3 | |
| 18 | 0.09 | 95.0 | 16.6 | 190 | 6.1 | 6.9 | | TD | 3 |
| 19 | 0.10 | 160.5 | 27.3 | 209 | 6.5 | 7.2 | | 15%H | 3 |
| 20 | 0.10 | 200.6 | 34.5 | 220 | 6.3 | 6.9 | | TD | 3 |
| 21 | 0.07 | 81.5 | 15.5 | 203 | 6.6 | 7.1 | 4%H | | 3 |
| 22 | 0.10 | 23.6 | 5.2 | 163 | 5.5 | 5.2 | 8%H | | 3 |

**TABLE 4**

| EXAMPLE NUMBER | TAN mgKOH/g | KINEMATIC VISCOSITY AT 40°C cSt ($mm^2/s$) | KINEMATIC VISCOSITY AT 100°C cSt ($mm^2/s$) | VISCOSITY INDEX | pH NEUTRALISATION | | PACKAGE STABILITY TEST | | STORAGE TIME (MONTHS) |
|---|---|---|---|---|---|---|---|---|---|
| | | | | | ALL CALCIUM | MIXED METAL | ALL CALCIUM | MIXED METAL | |
| C1 | 0.10 | 218.9 | 36.5 | 217 | 6.7 | 7.2 | 20%H | 3 | |
| C2 | 0.10 | 152.0 | 27.7 | 221 | 6.8 | 7.2 | 20%H | 3 | |
| C3 | 0.10 | 199.2 | 34.7 | 223 | 6.7 | 7.2 | 20%H | 3 | |
| C4 | 0.10 | 175.8 | 31.9 | 226 | 6.7 | 7.3 | 20%H | 3 | |
| C5 | 16.24 | 118.9 | 23.6 | 231 | 6.8 | 6.9 | 10%H | 15%H | 1 |
| C6 | 38.00 | 176.7 | 30.5 | 216 | 6.5 | 7.1 | | | |

**TABLE 5**

| EXAMPLE NO. | SEQUENCE IID RESULTS | |
|---|---|---|
| | ALL CALCIUM | MIXED METAL |
| 1 | 8.5 | 8.47 |
| 4 | - | 8.53 |
| 7 | - | 8.51 |
| 14 | - | 8.56 |

## Claims

1. A polyoxyalkylene compound of general formula

$$R^1-A-X-\overset{O}{\overset{\|}{C}}-R^2 \qquad I$$

wherein

$R^1$ represents a hydrogen atom or an optionally substituted alkyl, alkenyl, alkynyl, aryl, arylalkyl, cycloalkyl, alkylaryl or heterocyclyl group;

$R^2$ represents an optionally substituted alkyl, alkenyl, alkynyl, aryl, arylalkyl, cycloalkyl, alkylaryl, heterocyclyl, alkoxy, aryloxy, alkylamino, dialkylamino or arylamino group;

A represents an oxygen atom (-O-) or a group -NH-; and

X represents a polyoxypropylene chain or a random copolymer of ethylene oxide/propylene oxide, and an oxygen atom of group X is bonded directly to the $R^2CO$- moiety.

**2.** A compound as claimed in Claim 1, wherein R1 represents a $C_4$ to $C_{16}$ alkyl group.

**3.** A compound as claimed in Claim 1 or Claim 2, wherein $R^2$ represents an optionally substituted alkyl, phenyl or benzyl group.

**4.** A compound as claimed in any preceding Claim, wherein the number average molecular weight of group X is in the range 300 to 3500.

**5.** A compound as claimed in any preceding Claim, wherein the total acid number (TAN) of said compound of general formula I is less than 5.

**6.** A process for the preparation of a compound of general formula I, the process comprising reacting a compound of general formula

$$R^1\text{-A-X-OH} \quad V$$

wherein $R^1$, A and X are as defined in any preceding Claim, with a compound of general formula

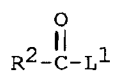

VI

wherein $R^2$ is as defined in any preceding Claim, and $L^1$ is a leaving group.

**7.** A lubricating oil composition comprising a major amount of a lubricating oil and a minor amount of a compound of general formula I as claimed in any of Claims 1 to 5.

**8.** A fuel composition comprising a major amount of a fuel and a minor amount of a compound of general formula I as claimed in any of Claims 1 to 5.

**9.** Use of a compound of general formula I as claimed in any of Claims 1 to 5 as a rust inhibitor.

**10.** A lubricating oil concentrate comprising a diluent and a compound of general formula I according to any of Claims 1 to 5 in an amount of 1 to 80wt% based on the total concentrate.

**11.** A method of operating an internal combustion engine to inhibit rust formation, the method comprising lubricating said engine with a lubricating oil composition according to Claim 7.

European Patent Office

# EUROPEAN SEARCH REPORT

Application Number
EP 95 20 0115

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | GB-A-792 198 (CALIFORNIA RESEARCH CORPORATION)<br>* page 4; example d *<br>* page 4, line 11 - line 15 * | 1-4,7, 9-11 | C10M145/38<br>C08G65/32<br>C10L1/18<br>//C10N30:12, C10N40:25, C10N70:00 |
| X | US-A-4 524 007 (SHELDON CHIBNIK)<br>* claims 1,4,7,8 * | 1-4,6,7 | |
| X | US-A-4 125 382 (E.F. O' BRIEN)<br>* column 2, line 12 - line 14 *<br>* column 2, line 32 - line 54 *<br>* column 2, line 55 - line 67 *<br>* column 4, line 16 - line 28 * | 1,2,4,6, 8 | |
| X | US-A-4 165 405 (R.B. LOGIN)<br>* column 2, line 44 - line 60 *<br>* column 3, line 51 - line 62 *<br>* column 4, line 34 - line 44 *<br>* column 4, line 55 - line 63 *<br>* column 5, line 57 - line 62 * | 1-6 | TECHNICAL FIELDS SEARCHED (Int.Cl.6) |
| D,A | EP-A-0 309 105 (EXXON CHEMICAL PATENTS)<br>* page 8, line 25 - line 26; claims 1,2,4,5 *<br>* page 8, line 41 * | 7-9 | C10M<br>C10L |
| D,A | US-A-5 204 012 (J.G. SCHAFFHAUSEN)<br>* claim 1 * | | |

The present search report has been drawn up for all claims

| Place of search | Date of completion of the search | Examiner |
|---|---|---|
| THE HAGUE | 28 April 1995 | Hilgenga, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)